# EUROPEAN PATENT APPLICATION

(11) **EP 4 636 574 A1**
(43) Date of publication of application: **22.10.2025**
(21) Application number: 24223673.5
(22) Date of filing: 30.12.2024
(51) Int. Cl.: G06F 8/30, G06N 3/006, G06N 20/00

(54) **ACTIONABLE AUTONOMOUS AGENT AND METHOD FOR MAKING AUTONOMOUS AGENTS BY ACCESS TO A TOOL LIBRARY**

(30) Priority: 17.04.2024 EP 24170819
(71) Applicant: HONDA MOTOR CO., LTD., Tokyo 105-8404 (JP)
(72) Inventor: Ocker, Felix, 63073 Offenbach/Main (DE)
(74) Representative: Beder, Jens

(57) **Abstract**

The invention relates to an autonomous agent and a method for controlling an autonomous agent. The autonomous agent comprises a memory storing a plurality of tools, a tool library storing tool information for each tool, and system intent computing means. The computing means are configured to apply various modules, in order to: determine an intent based on the system intent and/or a user's intent; determine a subset of tools by searching the tool library for possibly feasible tools based on the intent and the tool information; generate one or more actionable instructions by analyzing the tool information of the tools in the subset of tools for their suitability towards the determined intent; select one or more tools from the subset of tool; define necessary parameters based on the determined intent; and execute the generated actionable instruction(s).

## Description

The present invention relates to an autonomous agent and method for controlling an autonomous agent able to act in its environment.

Recently, a lot of research is done in the field of controlling autonomous agents, including embodied ones such as robots using large language models (LLMs) or, more generally deep-learning models. These have benefited greatly from the ability to use tools, i.e., call functions which are then executed. However, one major problem is that tool definitions that are encoded into the system prompt count against the context limit, which means that either the number of tools must be restricted or the definitions and information provided for each tool must be limited. However, even in case that the information about a tool is limited in order not to exceed the context window limit, there is still the problem that selecting one or several tools for executing a task from a large number of available tools is difficult for the model, as this process is subject to the "needle in a haystack" problem. Generally, tool use depends on the LLM's reasoning capabilities and prompt engineering to select the correct tools. Increasing the number of available tools however, leads to a degradation of the quality of selection.

Further, for LLMs it seems to be rather difficult to resolve complex sequences of tasks and it may be challenging to enforce a desired behavior via prompt engineering.

For autonomous agent applications it is desirable to provide access to functions of varying granularity, ranging from aggregate functions such as "book a flight" or "pick and place" respectively, and truly atomic functions such as navigating to a website or moving a single finger. While the first example, the aggregate functions, are easy to use, the atomic functions allow for greater flexibility and might become relevant for stepping through the process for debugging purposes.

Finally, state of the art methods for actionable LLMs are limited to a set of tools that is defined a priori, inherently limiting the system's ability to evolve and learn by adding new tools or changing existing ones.

Thus, there is a need for a system architecture and method that enables autonomous agents, including embodied ones, to make use of a dynamically adaptable set of tools. This holds in particular but not exclusively, for deep-learning models, specifically LLMs, without deteriorating their advantages for controlling autonomous agents.

This problem is solved by the inventive autonomous agent and corresponding method.

The autonomous agent able to act in its environment and corresponding method store a plurality of tools, a tool library holding tool information for each of the plurality of tools, and a system intent.

The method and autonomous agent apply an intent determination module for determining an intent based on the system intent and/or a user's intent wherein the determined intent specifies a goal of the autonomous agent and/or one or more subgoals. The determined intent is the basis for all further steps that are executed in order to finally execute actions by the autonomous agent. These actions are based on one or more of the stored tools which are selected from a plurality of tools for which tool information is stored in a tool library in a memory of the system. Information about the tool is associated with each tool and the selection of the specific tool is based on this tool information.

The description of the determined intent is provided to a search module, which determines a subset of tools by searching the tool library for possibly feasible tools based on the description of the intent and the tool information stored in the tool library.

It is to be noted that the determined intent may be equal to the system intent for which the intent determination module may only be adapted to retrieve the system intent from the memory. However, the system intent may be augmented or even replaced by a user intent, which may be input using a user interface.

The autonomous agent further comprises computing means configured to apply a tool selection module for generating one or more actionable instructions after the search module determined the subset of tools from the entirety of tools and provided the respective tool information stored in the tool library. When the actionable instruction is generated by the tool selection module, this instruction is executed by an instruction execution module. The tool selection module generates the one or more actionable instructions from the subset of tools and the determined intent.

Generation of the one or more actionable instructions includes analyzing the tool information of the tools in the subset of tools for their suitability towards the determined intent, selecting one or more tools from the subset of tools and defining necessary parameters based on the determined intent, wherein the tool selection module is configured to elicit information for using the selected tools from the determined intent and to initiate the selected tool according to the intent. By such tool selection module it is therefore achieved that the autonomous agent does not only select a plurality of possibly feasible tools but also provides information how to apply the selected tools considering the intent. Thus, based on the selected tools in combination with required information for their use, the actionable instruction (function call) can then be generated.

The autonomous agent further comprises an instruction execution module configured to receive one or more tool calls together with arguments, and to execute a function defined based on the respective tool and the provided arguments. Each tool call is a definition of the selected tool and the arguments provided by the information for using the selected tool, as explained above.

It is to be noted that the tool selection module, the search module and the instruction execution module are realized by software running on the computing means. The computing means is not limited to a single processor but can be formed by a plurality of processors cooperating to execute the software modules. The computations may also be performed, at least partially, by cloud computation.

It is an advantage of the present invention that the number of tools that could possibly be used for generating actionable instructions is not limited by the tool selection module, e.g., a deep-learning model is not limited by its context window. Rather, all available tools are stored in a memory and tool information for the tools are stored in a separate library in the memory and using the search module, a subset from the entirety of available tools is determined. Using only this subset of tools, the tool selection module now selects one or more feasible tools and, based on the determined intent and the tool information associated with the tool, generates an actionable instruction the autonomous agent executes. Such a separate library storing the tool information for the tools stored in the memory of the autonomous agent does not only enable an increase in the number of tools but also associating more information that is stored for the respective tool, with such additional information improving the results of selecting the appropriate tools by the tool selection module. Such further information may include, but is not limited to, pre and post conditions for tool execution, dependencies, and usage statistics.

The dependent claims define advantageous further aspects of the present invention.

The autonomous agent may include a user interface for receiving input from a user and/or convey information about at least one of the tool selection, instruction execution and the result to the user. Preferably, the autonomous agent further comprises an analysis and decomposition module for processing the user input to extract the user's intent and decompose the user's intent into subgoals. Thus, the interface allows that user intents are provided to the system. Based on such user input, the system extracts information on a user's intent. This extracted user intent is analyzed regarding subgoals and used to augment or replace the previous system intent.

The system may include a further interface to the system environment that identifies triggers which can be analyzed to adapt the system intent and initiate actions.

Preferably, the interface is configured to apply a planning step when analyzing the input to recursively identify subgoals relevant for specifying the intent.

Preferably, generating the actionable instructions includes a feasibility analysis of the tools included in the subset and, depending on a result of the analysis, revising the description of the determined intent, and receiving a new subset of tools determined by the search module based on the revised description, and generating the actionable instructions is then based on the user intent and the new subset of tools. Thus, such an additional loop for determining a subset of tools from which the tool selection module selects one or more tools as a basis for generating an actionable instruction(s) allows to improve the resulting subset and thereby the probability of finally selecting feasible tools for executing the originally intended task.

The information on the tools may include at least one of
- a semantic description of the tool
- at least one tool property, such as, but not limited to, descriptions of necessary inputs
- a dependency of the tool on another tool
- usage data of the tool.

The search module is advantageously configured to provide modified tool information for the determined subset of tools by adapting tool information of at least one of the tools in the subset and to provide such modified tool information to the tool selection module. Such provision of modified tool information allows to specifically tailor the tool information in a way that enables an improved selection of the best fitting tool by the tool selection module.

It is further advantageous that the instruction execution module is configured to provide feedback information to the tool selection module, which represents the result achieved by executing the function. The quality of the selection of the tools in the tool selection module is thereby improved and can be corrected.

Advantageously, the autonomous agent comprises an editing module configured to perform at least one of the following:
- remove tool information from the library, thereby suppressing selection of the respective tool,
- add new tool information for new tools to the library
- aggregate tools
- change tool information, wherein tool information change may include addition of information to existing tool information,
- merge identical tools
- create atomic tools from integrated tools.

Atomic tools are created by decomposing existing tools into more finegrained ones. For example, tool information for tools that are not used for a certain time interval or for tools that are unreliable can be removed from the library. On the other hand, new tools can be created and respective tool information can be added to the library or a plurality of different tools can be aggregated to create a single higher-level tool, for which corresponding tool information is added to the library. Identical tools can be merged and tool information can be changed in order to adapt to such merger or to newer requirements or an analysis of the tool selection by the tool selection module. In the same way as an aggregation of tools to create an aggregate tool can be performed, a tool can be divided in order to create subordinate or even atomic tools. The tool information stored in the library is adapted accordingly. Such creation of atomic tools may specifically be useful for the debugging process.

An overview over the present invention is presented in the attached drawings in which
Figure 1 shows the architecture of the system according to the invention and
Figure 2 shows a simplified flowchart illustrating the major method steps.

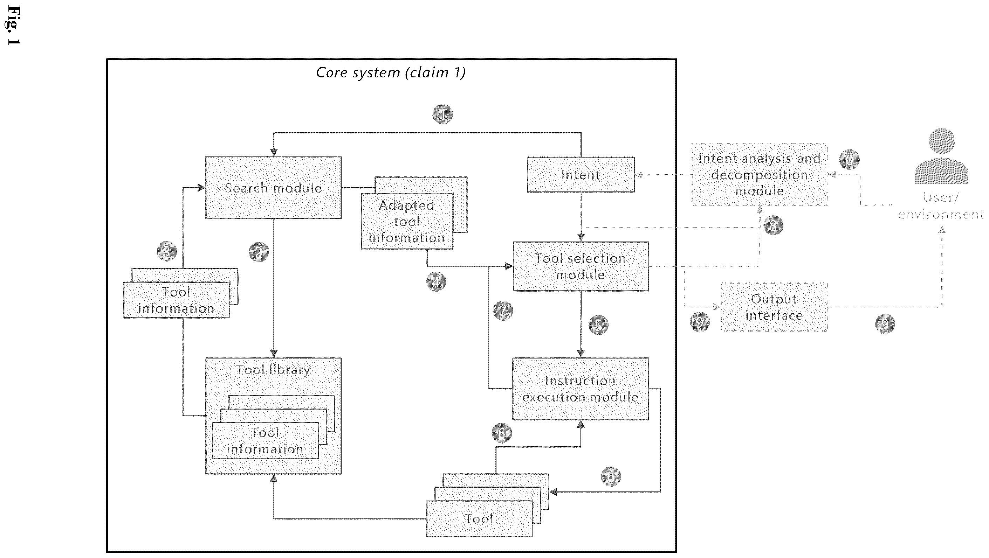

As indicated by ⓪ in Figure 1, the user optionally inputs information into an intent analysis and decomposition module, that might be a large language model. Based on the user input, which is provided to the system using a user interface, the module extracts the user intent, possibly decomposes it into subgoals and augments the system intent for determining an intent or updates a previously determined intent. The determined intent, which is, according to a preferred embodiment based on the system intent and adapted to the user intent, is provided to a search module as indicated by ①. The search module searches for possibly feasible tools in the tool library as indicated by the arrows ② and ③.

It is to be noted that the above explained embodiment refers to a user input for determining a user intent. However, more generally the autonomous agent may comprise an interface for obtaining environment information for receiving environment triggers used to adapt or replace the system intent. To address both situations the intent based on external information, be it user input or information on the environment obtained by the autonomous agent, the expression "external intent" may be used.

It is further to be noted that before the information on the external intent is provided to the search module, a description of the extracted external intent is generated by the intent analysis and decomposition module.

The tool library is stored in a memory of the system and holds tool information on available tools. Tool information is relevant information about the respective tool. For each of the stored tools stored in the memory, or at least for each tool that shall be usable for the system, respective tool information is stored in the tool library. Relevant information may specifically be any of the following types of information: a general semantic description of the tool, properties of the tool, dependencies between tools such as required predecessors and usage data of tools, such as success information. It is to be noted, that not all information mentioned above must be present in the tool information for each tool, but any combination of these listed types of information can be associated with a tool in the tool library. However, each tool information stored in the library is associated with at least one type of information mentioned above. The tool information stored is used for determining possibly feasible tools which means tools that might be suitable to be executed in response to the determined intent.

Based on the description of the determined intent that is provided to the search module in ①, the search module searches the tool library and determines one or a plurality of tools that are considered to be potentially suitable based on the description of the determined intent and the tool information associated with the respective tool. Thus, the search module determines a subset of tools for which tool information is provided to the tool selection module for selecting one or more tools from the subset. Since the search module has knowledge about the determined intent, it is possible in a preferred version of the present invention that the search module adapts the provided tool information in order to make it more suitable for the tool selection module, which is indicated by ④ in the drawing. It is to be noted that such an adaptation is not necessarily done for each of the tools included in the subset. However, in case that at least one tool in the determined subset of tools is adapted in the above-described manner, this means that the search module in step ④ provides modified tool information to the tool selection module.

The tool selection module performs a tool selection on the determined subset based on the provided tool information or modified tool information in order to decide on and select one or a plurality of tools, which are finally used for causing the autonomous agent to behave according to the determined intent. The input for the tool selection module is the determined intent and the semantic description of the tools and their arguments in the tool information. The selection of the tool selection module is performed based on the determined intent and the tool information, which is provided for the subset of tools.

An identifier for a selected tool or a plurality of identifiers for a selected plurality of tools from the subset are then provided with information defining the specific execution of the tools to an instruction execution module as indicated by arrow (5). The instruction execution module, that could be included in the tool library, uses tools ⑥ by executing functions or actionable instructions based on the tools identified by the identifiers and the information received.

Information about the status of the instruction execution, such as detailed information about success or failure, may be fed back from the instruction execution module to the tool selection module, as indicated by ⑦. Based on this feedback, e.g., in case the tools in the subset determined by the search module are not of the right granularity or failed, the tool selection module can initiate a revision of the intent to provide a revised determined intent via the intent analysis and decomposition module ⑧.

In addition to the executed instructions, the tool selection module may provide a response to the user via an output interface as indicated by arrow (9). The output interface may be part of a user interface that is also configured to receive input from a user.

In addition to the autonomous agent described so far, the autonomous agent may also comprise a self-exploration module applying evolutionary exploration to find suitable combinations of tools.

Further, the autonomous agent may comprise the debugging module, which registers failure in function calls based on feedback from functions, analyses meronomic relations in the tool library, debugs aggregate functions by stepping through the partial functions and stores the insights gained.

While the above provided explanations concentrate on the preferred system architecture of an autonomous agent in which the system intent is passed to the search module, possibly augmented with an external input analyzed by the intent analysis and decomposition module, it is also possible that the search module directly receives a user request that triggers searching the tool library.

Preferably, the tool library is implemented as a vector store. The tool library might be hierarchically and modularly organized. The search of the tool library can also be influenced by additional filters based on the current environment in which the system acts. Preconditions can be added to the tool description, for example in order to inhibit selecting a tool not suitable to be executed as a function under specific circumstances currently given by the environmental conditions. It is to be noted that in a more conventional implementation other databases could be used, e.g., BM25.

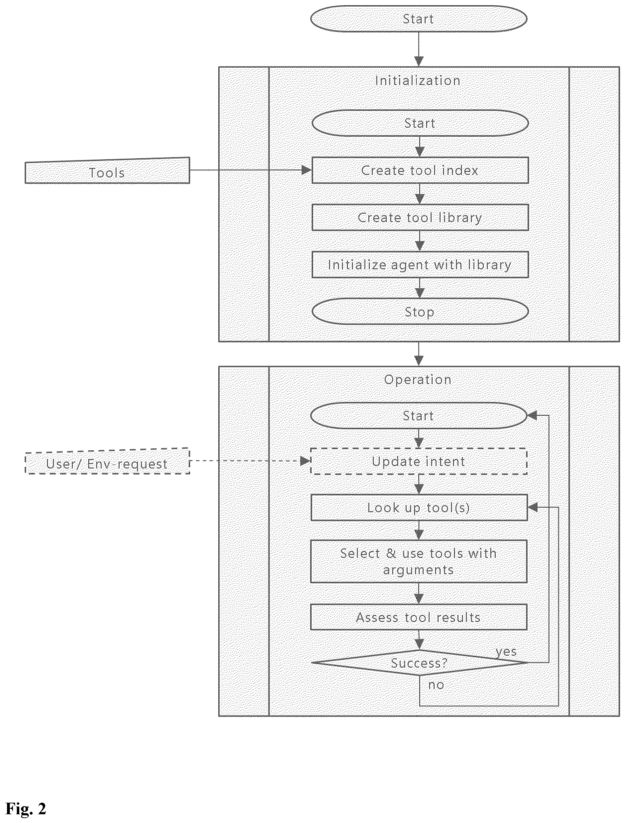

Figure 2 shows the major method steps that are described above with respect to the diagram illustrating the system architecture. As it can be seen from figure 2, at first, the tool library is set up, and then, during normal operation of the system, the determination of a subset of tools is based on the search of the tool library as described above. This determination of a subset of tools significantly reduces the information that needs to be processed and, in particular, allows to use detailed tool information to be stored for the tools. This detailed information is then used in the tool selectin module to select the best matching tools without conflicting with the size of the context window.

The autonomous agent with a system architecture and the method as explained above may specifically be used in embodied autonomous agents like personal assistants or robotic systems such as robots for attentive support.

Autonomous agents controlled by AI models require access to tools to become actionable in the real world. These functions range from various atomic primitives to more complex aggregates, such as pick and place functions in the case of robots. While more fine-grained functions (e.g., "get", "move", and "put") are beneficial for exact instructions, coarse-trained actions (e.g., "pick and place") reduce reasoning efforts, resulting in higher efficiency and better results. To be both efficient and accurate, it is desirable that the agent has access to all levels of granularity, resulting in a potentially very large set of relevant functions. It is also desirable that the agent may learn from its history, e.g., to create more efficient and often used aggregate functions, thus resulting in an increasing set of tools.

With the possibilities of function calls, autonomous agents turn into advanced and actionable personal assistants. They can use functions to retrieve information from various sources and initiate actions, such as booking a cab or composing and sending an email. For this, they require access to a potentially enormous number of functions, possibly provided by third-party applications. Specific applications range from chatbots provided by companies that are integrated into websites to personal assistants that serve individuals in everyday life.

## Claims

1. Autonomous agent, comprising:
a memory storing a plurality of tools, a tool library storing tool information for each of the plurality of tools, and a system intent
computing means configured to
apply an intent determination module for determining an intent based on the system intent and/or a user's intent wherein the determined intent specifies a goal of the autonomous agent and/or one or more subgoals
apply a search module for determining a subset of tools by searching the tool library for possibly feasible tools based on the intent and the tool information stored in the tool library, and
apply a tool selection module for generating one or more actionable instructions by analyzing the tool information of the tools in the subset of tools for their suitability towards the determined intent, selecting one or more tools from the subset of tools and defining necessary parameters based on the determined intent, wherein the tool selection module is configured to elicit information for using the selected tools from the determined intent and to initiate the selected tool according to the intent, and
apply an instruction execution module executing the generated actionable instruction(s).

2. Autonomous agent according to claim 1, further comprising
a user interface configured to receive input from a user and/or convey information about at least one of the tool selection, instruction execution and the result to the user.

3. Autonomous agent according to claim 2, further comprising an analysis and decomposition module for processing user input to extract the user's intent, and decompose the user's intent into subgoals.

4. Autonomous agent according to any one of claims 1 to 3, the autonomous agent further including an interface for receiving an environment trigger and the computing means is configured to apply the search module and the selection module according to the environment trigger.

5. Autonomous agent according to any one of claims 1 to 4,
wherein the generating of the actionable instructions includes a feasibility analysis of the tools included in the subset and, depending on a result of the analysis, revising the description of the determined intent via the intent analysis and decomposition module, and receiving tool information for a new subset of tools determined by the search module based on the revised description, and generating the actionable instructions is based on the determined intent and the new subset of tools.

6. Autonomous agent according to any one of claims 1 to 5,
wherein the information on the tools includes at least one of
- a semantic description of the tool
- at least one tool property
- a dependency of the tool on another tool
- usage data of the tool.

7. Autonomous agent according to any one of claims 1 to 6,
wherein the search module is configured to provide modified tool information for the determined subset of tools by adapting tool information of at least one of the tools in the subset and to provide such modified subset to the tool selection module.

8. Autonomous agent according to any one of claims 1 to 7,
wherein the instruction execution module is further configured to provide feedback information to the tool selection module.

9. System according to any one of claims 1 to 8,
wherein the intent analysis and decomposition module is configured to apply a planning step when analyzing the user input to recursively identify relevant subgoals.

10. System according to any one of claims 1 to 9,
wherein the autonomous agent comprises an editing module configured to perform at least one of the following:
- remove tool information from the library
- change tool information
- add new tool information to the library for new tools,
- create new tools by aggregating existing ones,
- merge identical tools
- create atomic tools.

11. Autonomous agent according to any one of claims 1 to 10, further comprising a self-exploration module, which applies evolutionary exploration to find suitable combinations of tools for realizing the system intent.

12. Autonomous agent according to any one of claims 1 to 11,
wherein the autonomous agent comprises a debugging module, which can perform at least one of the following:
- register failures in the tool executions based on feedback from the instruction execution module,
- analyze meronomic relations in the tool library,
- debug aggregate tool executions by executing the subordinate tools incrementally,
- store the insights gained about failures in the memory.

13. Method for controlling an autonomous agent to act in its environment, the method comprising:
storing, in a memory, a plurality of tools, a tool library storing tool information for each of the plurality of tools, and a system intent
applying an intent determination module for determining an intent based on the system intent and/or a user's intent wherein the determined intent specifies a goal of the autonomous agent and/or one or more subgoals
applying a search module for determining a subset of tools by searching the tool library for possibly feasible tools based on the intent and the tool information stored in the tool library, and
applying a tool selection module for generating one or more actionable instructions by analyzing the tool information of the tools in the subset of tools for their suitability towards the determined intent, selecting one or more tools from the subset of tools and defining necessary parameters based on the determined intent, wherein the tool selection module is configured to elicit information for using the selected tools from the determined intent and to initiate the selected tool according to the intent, and
applying an instruction execution module executing the generated actionable instruction(s).
